# EUROPEAN PATENT APPLICATION

(11) **EP 4 693 522 A1**
(43) Date of publication of application: **11.02.2026**
(21) Application number: 24784050.7
(22) Date of filing: 15.03.2024
(51) Int. Cl.: H01M 4/66, H01M 10/613, H01M 10/654, H01M 10/659

(54) **CURRENT COLLECTOR AND PREPARATION METHOD THEREFOR, ELECTRODE SHEET, ELECTROCHEMICAL APPARATUS AND ELECTRONIC DEVICE**

(30) Priority: 06.04.2023 CN 202310360607
(71) Applicant: Ningde Amperex Technology Limited, Ningde, Fujian 352100 (CN)
(72) Inventor: YAN, Jiaxiao, Ningde, Fujian 352100 (CN)
(74) Representative: Kraus & Lederer PartGmbB
(86) International application number: PCT/CN2024/082034
(87) International publication number: WO 2024/207965

(57) **Abstract**

A current collector and a preparation method thereof, an electrode plate, an electrochemical apparatus, and an electronic device are provided and pertain to the field of electrochemical apparatus technologies. The current collector includes an organic substrate layer and conductive layers disposed on two surfaces of the organic substrate layer. An initial melting temperature and phase change latent heat of a material of the organic substrate layer of the current collector are controlled so that the current collector can absorb a large amount of heat after reaching the initial melting temperature. During operation of an electrochemical apparatus using the current collector, when an operating temperature of the electrochemical apparatus reaches the initial melting temperature of the material of the organic substrate layer, the organic substrate layer experiences a phase change to absorb heat of the electrochemical apparatus, reducing the temperature of the electrochemical apparatus and reducing the risk of thermal runaway of the electrochemical apparatus, thereby improving the safety performance of the electrochemical apparatus.

## Description

### CROSS-REFERENCE TO RELATED APPLICATIONS

This application claims priority to Chinese Patent Application No. 202310360607.X, filed on April 06, 2023 and entitled "CURRENT COLLECTOR AND PREPARATION METHOD THEREOF, ELECTRODE PLATE, ELECTROCHEMICAL APPARATUS, AND ELECTRONIC DEVICE", which is incorporated herein by reference.

### TECHNICAL FIELD

This application relates to the field of electrochemical apparatus technologies, and specifically, to a current collector and a preparation method thereof, an electrode plate, an electrochemical apparatus, and an electronic device.

### BACKGROUND

With the update and development of lithium-ion battery technologies, the application fields of lithium-ion batteries are also expanding, and the accompanying cell safety problems are getting more and more public attention. Safety accidents of lithium-ion batteries, characterized by the thermal runaway after mechanical damage of cells, occur frequently, which brings certain resistance to the development of lithium-ion batteries. How cell safety problems are resolved is a challenge facing the lithium battery industry.

At present, thermal runaway control solutions are usually implemented by improving performance of the four major materials. However, the performance improvement of the four major materials will result in loss of electrical performance and energy density of cells.

### SUMMARY

This application provides a current collector and a preparation method thereof, an electrode plate, an electrochemical apparatus, and an electronic device, so as to overcome the current technical bias that thermal runaway can only be alleviated by adjusting the four major materials, and to provide a new way to alleviate thermal runaway.

According to a first aspect, an embodiment of this application provides a current collector. The current collector includes: an organic substrate layer and conductive layers disposed on two surfaces of the organic substrate layer. A material of the organic substrate layer includes a first polymer material. An initial melting temperature of the first polymer material is not higher than 160°C. The first polymer material is a phase-change material.

In the foregoing implementation process, the initial melting temperature of the material of the organic substrate layer of the current collector is controlled so that the current collector can absorb heat after reaching the initial melting temperature. During operation of an electrochemical apparatus using the current collector, when an operating temperature of the electrochemical apparatus reaches the initial melting temperature of the material of the organic substrate layer, the organic substrate layer experiences a phase change to absorb cell heat of the electrochemical apparatus, thereby reducing the temperature of the electrochemical apparatus. Further, in some implementations, when the initial melting temperature is not higher than a thermal runaway temperature of the electrochemical apparatus, the risk of thermal runaway of the electrochemical apparatus can be reduced, thereby improving the safety performance of the electrochemical apparatus.

In an optional implementation, the initial melting temperature of the first polymer material is 120°C to 160°C.

In the foregoing implementation process, a lower initial melting temperature of the material of the organic substrate layer means that phase-change heat absorption can be implemented at a lower temperature, such that the electrochemical apparatus can be cooled through heat absorption.

In an optional implementation, the melting range of the first polymer material does not exceed 15°C.

In the foregoing implementation process, the melting range of the material of the organic substrate layer is controlled so that a large amount of heat is absorbed within a short time, the heat of the cell is absorbed more quickly, and thus the temperature of the electrochemical apparatus can be controlled more effectively, thereby reducing the risk of thermal runaway.

In an optional implementation, the phase change latent heat of the first polymer material is not less than 200 J/g.

In the foregoing implementation process, the phase change latent heat of the first polymer material is controlled to be not less than 200 J/g, so that the current collector can absorb a large amount of heat after reaching the initial melting temperature, thereby better reducing the temperature of the electrochemical apparatus.

In an optional implementation, a crystalline structure of the first polymer material includes fibrous crystal.

In the foregoing implementation process, the fibrous crystal polymer material has a relatively short melting range, allowing for fast heat absorption when the material of the organic substrate layer is melted. In addition, the fibrous crystal polymer material has good mechanical properties, helping to improve the yield rate, efficiency, and hardness to some extent in a subsequent cell preparation process. Besides, the inventors also have found that with a fibrous crystal polymer material as the material of the organic substrate layer, when such organic substrate layer is applied to an electrochemical apparatus, it can help to maintain high safety under a relatively high temperature. Through analysis, the inventors have found that the reason may be: the organic substrate layer made of a fibrous crystal polymer material makes the cell less likely to swell and deform under a relatively high temperature, reducing short circuit points in the cell, thereby achieving high-temperature safety performance. Moreover, surface chain segments of the fibrous crystal polymer material can tightly bond with a layer attached to the surface, improving detachment performance to some extent.

In an optional implementation, the first polymer material includes at least one of polypropylene, polyethylene, polystyrene, polyvinyl chloride, polyether, polyester, polyamide, polyurethane, or polysulfide rubber.

In the foregoing implementation process, polypropylene, polyethylene, polystyrene, polyvinyl chloride, polyether, polyester, polyamide, polyurethane, or polysulfide rubber is used as the material of the organic substrate layer, allowing for safe operation under a higher temperature when the current collector is applied to an electrochemical apparatus.

In an optional implementation, a number-average molecular weight of the first polymer material is 10⁴ to 10⁶.

In the foregoing implementation process, a molecular weight of the polymer material usually has a certain correspondence with its initial melting temperature. The materials such as polypropylene, polyethylene, polystyrene, polyvinyl chloride, polyether, polyester, polyamide, polyurethane, and polysulfide rubber with a number-average molecular weight of 10⁴ to 10⁶ can meet the requirement that the initial melting temperature is not higher than 160°C.

In an optional implementation, the initial melting temperature of the first polymer material is 130°C to 150°C.

In the foregoing implementation process, controlling the initial melting temperature of the first polymer material to be 130°C to 150°C allows for safe operation under a higher temperature when the current collector is applied to an electrochemical apparatus.

In an optional implementation, the melting range of the first polymer material does not exceed 10°C.

In the foregoing implementation process, a smaller melting range allows the material of the organic substrate layer to absorb the heat of the cell more quickly, and thus the temperature of the cell can be controlled more effectively, thereby reducing the risk of thermal runaway.

In an optional implementation, the phase change latent heat of the first polymer material is not less than 300 J/g.

In the foregoing implementation process, the larger phase change latent heat of the material of the organic substrate layer requires more heat to be absorbed for phase change of the material, so that a large amount of heat is absorbed with use of a small amount of material of the organic substrate layer. To some extent, this can facilitate thickness control of the entire current collector.

In an optional implementation, the current collector further includes an adhesive layer, where the adhesive layer is disposed between the organic substrate layer and the conductive layer.

In the foregoing implementation process, the provision of the adhesive layer can enhance an adhesion force between the organic substrate layer and the conductive layer, thereby improving the detachment performance of the conductive layer.

In an optional implementation, a material of the adhesive layer includes a second polymer material, and the second polymer material includes at least one of polyvinyl alcohol, acrylate adhesive, unsaturated polyester adhesive, EVA hot melt adhesive, or acrylic emulsion adhesive.

In the foregoing implementation process, the materials such as polyvinyl alcohol, acrylate adhesive, unsaturated polyester adhesive, EVA hot melt adhesive, and acrylic emulsion adhesive all have good adhesivity. Especially, in a substance with a hydroxyl functional group, a plurality of hydroxyls form a hydrogen bond, thereby further enhancing the adhesion strength between the adhesive layer and the organic substrate layer as well as between the adhesive layer and the conductive layer.

In an optional implementation, the material of the adhesive layer further includes a filler. Optionally, the filler includes at least one of boehmite, silicon oxide, carbon powder, or nanofiber. Optionally, the filler includes a pigment.

In the foregoing implementation process, the addition of the filler can provide functions other than the adhesion performance. For example, the addition of fillers such as boehmite, silicon oxide, carbon powder, and nanofiber can enhance the hardness of the adhesive layer; and the addition of fillers such as pigments can dye the adhesive layer so that the attachment of the adhesive layer can be known.

In an optional implementation, a thickness of the conductive layer is 0.1 µm to 4 µm.

In the foregoing implementation process, a thinner conductive layer leads to better safety performance of a corresponding cell, while a thicker conductive layer leads to better electrical performance of a corresponding cell. Controlling the thickness of the conductive layer to be 0.1 µm to 4 µm can guarantee both the safety performance and the electrical performance of the cell.

Optionally, the thickness of the conductive layer is 0.5 µm to 3 µm.

In the foregoing implementation process, controlling the thickness of the conductive layer to be 0.5 µm to 3 µm allows the cell to have both good safety performance and electrical performance, so that the entire cell has better comprehensive performances.

According to a second aspect, an embodiment of this application provides a preparation method of current collector. The method includes: attaching a conductive layer to a surface of an organic substrate layer, where a material of the organic substrate layer includes a first polymer material, an initial melting temperature of the first polymer material is not higher than 160°C, and the first polymer material is a phase-change material.

In an optional implementation, the attaching a conductive layer to a surface of an organic substrate layer includes: attaching an adhesive layer to the organic substrate layer; and attaching the conductive layer to a surface of the adhesive layer away from the organic substrate layer.

In the foregoing implementation process, the provision of the adhesive layer enhances an adhesion force between the organic substrate layer and the conductive layer, thereby improving detachment performance of the conductive layer.

In an optional implementation, the attaching the conductive layer to a surface of the adhesive layer away from the organic substrate layer includes: attaching a metal plate to the surface of the adhesive layer away from the organic substrate layer, and then thinning the metal plate to transform the metal plate into a conductive layer.

In the foregoing implementation process, the attachment of the metal plate to the adhesive layer is implemented through thermal compounding, thereby preventing damage to the organic substrate layer caused by a method like sputtering.

In an optional implementation, a method for the thinning includes chemical corrosion; and/or a thickness of the metal plate is 5 µm to 20 µm.

In the foregoing implementation process, a thicker metal plate has a higher strength, making it easier to process during preparation. However, considering that the metal plate needs to be thinned eventually, a thinner metal plate allows for higher efficiency during thinning and reduces waste of metal.

In an optional implementation, the attaching an adhesive layer to the organic substrate layer includes: stacking a raw material of an adhesive layer and a raw material of the organic substrate layer, and then performing synchronous compounding and stretching to attach the adhesive layer to the organic substrate layer.

In the foregoing implementation process, compared with a method such as dipping, coating, or physical vapor deposition, the method of synchronous compounding and stretching has fewer steps, effectively improving the preparation efficiency and achieving better coverage of the adhesive layer. The use of thermal compounding prevents damage to the metal plate in a phase change process of a polymer layer, for example, changing from solid state to liquid state and then back to the solid state from the liquid state. If other methods are used, the metal plate may be damaged.

In an optional implementation, the raw material of the adhesive layer includes a prepolymer of a second polymer material, a number-average molecular weight of the prepolymer is 5×10³ to 7×10³; and/or a melting point of the prepolymer is not higher than 100°C; and/or the method further includes heating the adhesive layer for curing so as to implement polymerization of the prepolymer.

In the foregoing implementation process, controlling the number-average molecular weight of the prepolymer to be 5×10³ to 7×10³ allows the prepolymer to have certain fluidity, so that the prepolymer can be applied onto an organic substrate more uniformly. In addition, controlling the melting point of the prepolymer to be not higher than 100°C allows the prepolymer to be polymerized in a subsequent heating process during preparation, thereby implementing better adhesion performance.

According to a third aspect, an embodiment of this application provides an electrochemical apparatus, where the electrochemical apparatus includes the current collector according to the first aspect.

According to a fourth aspect, an embodiment of this application provides an electronic device, where the electronic device includes the electrochemical apparatus according to the third aspect.

### BRIEF DESCRIPTION OF DRAWINGS

To describe the technical solutions of some embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a current collector according to an embodiment of this application;
FIG. 2 is a schematic structural diagram of an electrode plate according to an embodiment of this application;
FIG. 3 is a schematic structural diagram of an electrochemical apparatus according to an embodiment of this application; and
FIG. 4 is a flowchart of a method according to an embodiment of this application.

Reference signs: 1000. electrochemical apparatus; 100. electrode plate; 10. current collector; 1. organic substrate layer; 2. conductive layer; 3. adhesive layer; 20. active material layer; 200. separator; and 300. tab.

### DESCRIPTION OF EMBODIMENTS

The following describes in detail implementation solutions of this application with reference to some embodiments. However, persons skilled in the art will understand that the following embodiments are merely intended to illustrate this application rather than to limit the scope of this application. Embodiments, where specific conditions are not specified, are implemented in accordance with general conditions or those recommended by a manufacturer. The reagents or instruments used are all conventional products that are commercially available if no manufacturer is indicated.

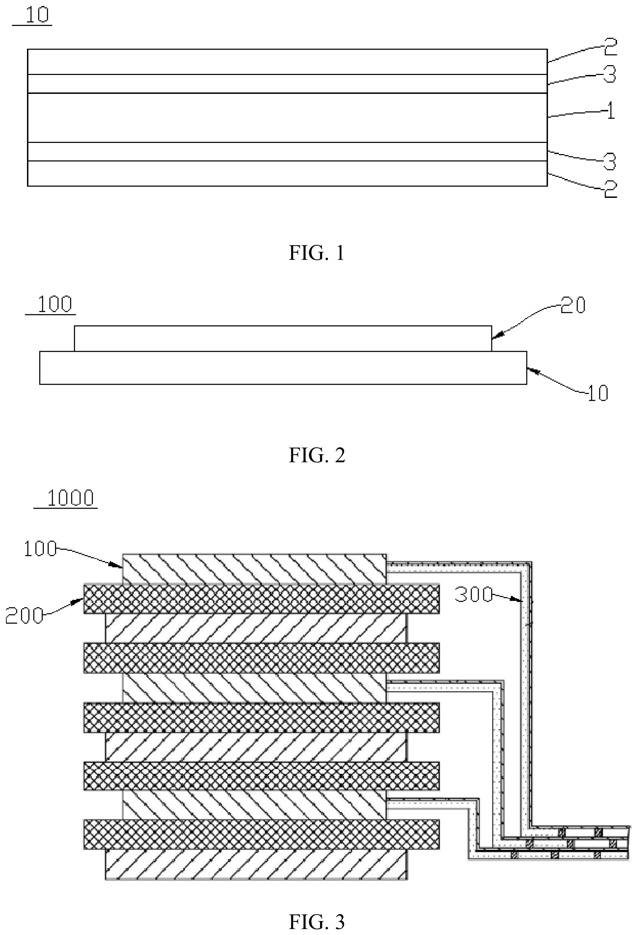

Some embodiments of this application provide an electronic device. The electronic device may be any electronic apparatus, for example, a mobile phone, a notebook computer, a camera, a digital camera, an electric toy, or an electric vehicle. The electronic device includes an electrochemical apparatus 1000. As shown in FIG. 3, the electrochemical apparatus 1000 includes electrode plates 100, a separator 200, and a tab 300. The separator 200 is disposed between two electrode plates 100; the two electrode plates 100 are stacked or wound to form the electrochemical apparatus 1000; and the tab 300 is connected to the electrode plates 100. As shown in FIG. 2, the electrode plate 100 includes a current collector 10 and an active material layer 20 applied onto at least part of a surface of the current collector 10.

At present, safety accidents of lithium-ion batteries, characterized by the thermal runaway after mechanical damage of an electrochemical apparatus 1000 in an electronic device, occur frequently, which brings certain resistance to the development of lithium-ion batteries. How safety problems of electrochemical apparatuses 1000 is resolved is a challenge facing the lithium battery industry. Typically, thermal runaway control solutions are often implemented by improving performance of the four major materials. However, the performance improvement of the four major materials results in loss of electrical performance and energy density of cells.

Therefore, with an intention to overcome the technical bias that thermal runaway can only be alleviated by adjusting the four major materials at present, the inventors provide a new way to alleviate thermal runaway, which is specifically as follows.

An embodiment of this application further provides an electrochemical apparatus 1000, and the electrochemical apparatus 1000 includes a current collector 10. The current collector 10 includes: an organic substrate layer 1 and conductive layers 2 disposed on two surfaces of the organic substrate layer 1. A material of the organic substrate layer 1 includes a first polymer material. An initial melting temperature of the first polymer material is not higher than a thermal runaway temperature of the electrochemical apparatus 1000. The first polymer material is a phase-change material. It should be noted that the thermal runaway temperature of the electrochemical apparatus 1000 is measured through a hot box test.

The initial melting temperature of the material of the organic substrate layer 1 of the current collector 10 in the electrochemical apparatus 1000 is controlled to be not higher than the thermal runaway temperature of the electrochemical apparatus 1000, so that when an operating temperature of the electrochemical apparatus 1000 reaches the initial melting temperature of the material of the organic substrate layer 1, the organic substrate layer 1 experiences a phase change to absorb heat of the electrochemical apparatus 1000, thereby cooling the electrochemical apparatus 1000. In this way, the risk of thermal runaway of the electrochemical apparatus 1000 can be reduced, thereby improving the safety performance of the electrochemical apparatus 1000.

The following uses an electrochemical apparatus 1000 whose thermal runaway temperature is not higher than 160°C as an example for specific description. A current collector 10 of the electrochemical apparatus 1000 includes: an organic substrate layer 1 and conductive layers 2 disposed on two surfaces of the organic substrate layer 1. Referring to FIG. 1, a material of the organic substrate layer 1 includes a first polymer material, an initial melting temperature of the first polymer material is not higher than 160°C, and the first polymer material is a phase-change material.

A light and thin polymer film may be used as the organic substrate layer 1 and is disposed at the middle of the current collector 10, so that thickness of a metal layer can be greatly reduced, reducing the weight to some extent, thereby increasing gravimetric energy density of a cell. As a mechanical support for the entire current collector 10, the organic substrate layer 1 has a wider operation window in processing because polymer has better deformation and extension than metal. Therefore, the current collector 10 has various advantages including reduced weight, increased energy density, guaranteed mechanical safety of cells, and easy processing. A thickness of the organic substrate layer 1 may be 1.7 µm to 4.5 µm.

The conductive layer 2 may be made of a metal conductive material or a carbon-based conductive material. The metal conductive material may be at least one of aluminum, copper, nickel, titanium, silver, nickel-copper alloy, or aluminum-zirconium alloy; the carbon-based conductive material may be at least one of graphite, acetylene black, graphene, or carbon nanotubes; and a thickness of the conductive layer may be 0.5 µm to 4 µm.

An initial melting temperature refers to an initial temperature at which a solid changes its physical state from a solid state to a liquid state (by melting). The initial melting temperature of the first polymer material being not higher than 160°C means that the first polymer can change from a solid state to a liquid state (by melting) at a temperature not higher than 160°C.

The initial melting temperature of the material of the organic substrate layer 1 of the current collector 10 is controlled, such that the current collector 10 can absorb heat after reaching the initial melting temperature. During operation of the electrochemical apparatus 1000 using the current collector 10, when an operating temperature of the electrochemical apparatus 1000 reaches the initial melting temperature of the material of the organic substrate layer 1, the organic substrate layer 1 experiences a phase change to absorb cell heat of the electrochemical apparatus 1000, thereby reducing the temperature of the electrochemical apparatus 1000 and thus improving the safety performance of the electrochemical apparatus 1000. Further, in some implementations, when the initial melting temperature of the organic substrate layer is not higher than a thermal runaway temperature of the electrochemical apparatus 1000, the risk of thermal runaway of the electrochemical apparatus 1000 can be reduced, thereby improving the safety performance of the electrochemical apparatus 1000.

In some embodiments, the initial melting temperature of the first polymer material is 120°C to 160°C. A lower initial melting temperature of the material of the organic substrate layer 1 allows phase-change heat absorption to be implemented at a lower temperature, thereby cooling the electrochemical apparatus 1000 through heat absorption. Optionally, the initial melting temperature of the first polymer material is 130°C to 150°C. Controlling the initial melting temperature of the first polymer material to be 130°C to 150°C allows for safe operation under a higher temperature when the current collector 10 is applied to the electrochemical apparatus 1000. For example, the initial melting temperature of the first polymer material may be 120°C, 125°C, 130°C, 135°C, 140°C, 145°C, 150°C, 155°C, 160°C, or any value within a range not exceeding 160°C.

In some embodiments, a melting range of the first polymer material does not exceed 15°C.

Melting range refers to a range from an initial melting temperature to a final melting temperature, where the initial melting temperature refers to an initial temperature at which a solid changes its physical state from a solid state to a liquid state (by melting), while the final melting temperature refers to a temperature at which a substance completely melts. That the melting range does not exceed 15°C means that a value obtained by subtracting the initial melting temperature from the final melting temperature of the substance does not exceed 15°C.

The melting range of the material of the organic substrate layer 1 is controlled, so that a large amount of heat is absorbed within a short time and the heat of the cell is absorbed more quickly, thereby controlling the temperature of the electrochemical apparatus 1000 more effectively and reducing the risk of thermal runaway.

Optionally, the melting range of the first polymer material does not exceed 10°C. Optionally, the melting range of the first polymer material does not exceed 5°C. Optionally, the melting range of the first polymer material does not exceed 3°C.

A smaller melting range allows the material of the organic substrate layer 1 to absorb the heat of the cell more quickly, thereby controlling the temperature of the cell more effectively and reducing the risk of thermal runaway.

For example, the melting range of the first polymer material may be 15°C, 14°C, 13°C, 12°C, 11°C, 10°C, 9°C, 8°C, 7°C, 6°C, 5°C, 4°C, 3°C, 2°C, or any value not higher than 15°C.

In some embodiments, a crystalline structure of the first polymer material includes fibrous crystal.

A crystalline structure means that various monomer units in a copolymer crystal lattice can be mutually substituted, to be specific, the monomer units have similar lattice constants and lattice angles and identical helical conformations. Common types of crystalline structures include: monocrystal, spherocrystal, extended chain lamella, fibrous crystal, shish-kebab, and the like.

In fibrous crystal, a molecular chain extension direction is parallel to a fiber axis, the entire molecular chain is in an extended state in fiber, and a length of the fibrous crystal can greatly exceed an actual length of the molecular chain.

In these embodiments, the first polymer material in fibrous crystal structure is obtained through preparation. The following describes preparation of polypropylene. Polypropylene, a flatting agent, and a surface-modified small-molecular polymer are simultaneously added into an agitator tank; then an initiator is added into the agitator tank; a mixture obtained is heated to 180°C to 210°C and stirred for 20 min to 25 min; subsequently, the temperature is kept unchanged, a temperature regulator is added into the mixture, and the resulting mixture is molten and stirred for 20 min to 30 min, cooled, and crystallized to obtain fibrous crystal polypropylene.

With a relatively small melting range, the fibrous crystal polymer material can implement fast heat absorption when the material of the organic substrate layer 1 is melted. In addition, the fibrous crystal polymer material has good mechanical properties, helping to improve the yield rate, efficiency, and hardness to some extent in a subsequent cell preparation process. Besides, the inventors also have found that with a fibrous crystal polymer material as the material of the organic substrate layer 1, when such organic substrate layer 1 is applied to an electrochemical apparatus 1000, it can help to maintain high safety under a relatively high temperature. Through analysis, the inventors have found that the reason may be: the organic substrate layer 1 made of a fibrous crystal polymer material makes the cell less likely to swell and deform under a relatively high temperature, reducing short circuit points in the cell, thereby achieving high-temperature safety performance. Moreover, surface chain segments of the fibrous crystal polymer material can tightly bond with a layer attached to the surface, improving detachment performance to some extent.

In some embodiments, phase change latent heat of the first polymer material is not less than 200 J/g.

Phase change latent heat refers to heat absorbed or released per unit mass of substance when the substance changes from one phase to another phase under a constant-temperature and constant-pressure condition. The phase change latent heat being not less than 200 J/g means that at least 200 j of heat needs to be absorbed for per gram of substance to melt from a solid state to a liquid state.

The phase change latent heat of the first polymer material is controlled to be not less than 200 J/g, such that the current collector can absorb a large amount of heat after reaching the initial melting temperature, thereby better reducing the temperature of the electrochemical apparatus.

Optionally, the phase change latent heat of the first polymer material is not less than 300 J/g. Optionally, the phase change latent heat of the first polymer material is not less than 400 J/g.

More phase change latent heat of the material of the organic substrate layer 1 requires more heat to be absorbed for phase change of the material, so that a large amount of heat is absorbed with use of a small amount of material of the organic substrate layer 1. To some extent, this can facilitate thickness control of the entire current collector 10.

For example, the phase change latent heat of the first polymer material may be 200 J/g, 250 J/g, 300 J/g, 350 J/g, 400 J/g, or any value not less than 200 J/g.

In some embodiments, the first polymer material includes at least one of polypropylene, polyethylene, polystyrene, polyvinyl chloride, polyether, polyester, polyamide, polyurethane, or polysulfide rubber.

Polypropylene, polyethylene, polystyrene, polyvinyl chloride, polyether, polyester, polyamide, polyurethane, or polysulfide rubber is used as the material of the organic substrate layer 1, allowing for safe operation under a higher temperature when the current collector 10 is applied to the electrochemical apparatus 1000.

Optionally, a number-average molecular weight of the first polymer material is 10⁴ to 10⁶.

A polymer is formed by homogenous mixtures that have the same chemical compositions but different polymerization degrees, that is, formed by a mixture of polymers with different molecular chain lengths. Typically, a size of a molecule is represented by number-average molecular weight. Number-average molecular weight is an average counted based on the number of molecules, denoted by (Mn). Number-average molecular weight=sum of molecular weights of components × mole number of components/total mole number

The molecular weight of a polymer material typically has a certain correspondence with its initial melting temperature. The materials such as polypropylene, polyethylene, polystyrene, polyvinyl chloride, polyether, polyester, polyamide, polyurethane, and polysulfide rubber with a number-average molecular weight of 10⁴ to 10⁶ can meet the requirement that the initial melting temperature is not higher than 160°C.

In some embodiments, the thickness of the conductive layer 2 is 0.1 µm to 4 µm.

A thinner conductive layer 2 leads to better safety performance of a corresponding cell, while a thicker conductive layer 2 leads to better electrical performance of a corresponding cell. Controlling the thickness of the conductive layer 2 to be 0.1 µm to 4 µm can guarantee both the safety performance and the electrical performance of the cell.

Optionally, the thickness of the conductive layer 2 is 0.5 µm to 3 µm. Optionally, the thickness of the conductive layer 2 is 0.9 µm to 2 µm.

Controlling the thickness of the conductive layer to be 0.5 µm to 3 µm allows the cell to have both good safety performance and electrical performance, so that the entire cell has better comprehensive performance.

For example, the thickness of the conductive layer 2 may be 0.1 µm, 0.5 µm, 1.0 µm, 1.5 µm, 2.0 µm, 2.5 µm, 3.0 µm. 3.5 µm, 4.0 µm, or the like, or may be any value within the range of 0.1 µm to 4 µm.

In some embodiments, the current collector 10 further includes an adhesive layer 3, where the adhesive layer 3 is disposed between the organic substrate layer 1 and the conductive layer 2. The provision of the adhesive layer 3 can enhance an adhesion force between the organic substrate layer 1 and the conductive layer 2, thereby improving the detachment performance of the conductive layer 2.

In some embodiments, a material of the adhesive layer 3 includes a second polymer material, and the second polymer material includes at least one of polyvinyl alcohol, acrylate adhesive, unsaturated polyester adhesive, EVA hot melt adhesive, or acrylic emulsion adhesive. The materials such as polyvinyl alcohol, acrylate adhesive, unsaturated polyester adhesive, EVA hot melt adhesive, and acrylic emulsion adhesive all have good adhesivity. Especially, in a substance with a hydroxyl functional group, a plurality of hydroxyls form a hydrogen bond, thereby further enhancing the adhesion strength between the adhesive layer 3 and the organic substrate layer 1 as well as between the adhesive layer 3 and the conductive layer 2.

In some embodiments, the material of the adhesive layer 3 further includes a filler. Optionally, the filler includes at least one of boehmite, silicon oxide, carbon powder, or nanofiber. Optionally, the filler includes a pigment. The addition of the filler can provide functions other than the adhesion performance. For example, the addition of fillers such as boehmite, silicon oxide, carbon powder, and nanofiber can enhance the hardness of the adhesive layer 3; and the addition of fillers such as pigments can dye the adhesive layer 3 so that the attachment of the adhesive layer 3 can be known.

An embodiment of this application further provides a preparation method of a current collector 10. The method includes: attaching a conductive layer 2 to a surface of an organic substrate layer 1, where a material of the organic substrate layer 1 includes a first polymer material, an initial melting temperature of the first polymer material is not higher than 160°C, a melting range of the first polymer material does not exceed 10°C, and phase change latent heat of the first polymer material is not less than 200 J/g.

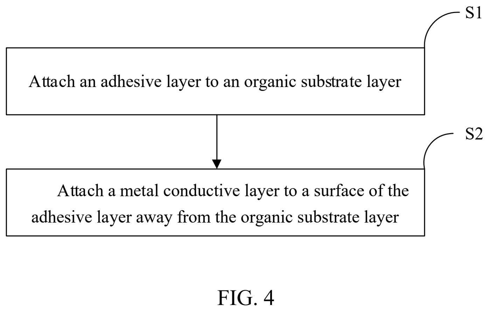

In some embodiments, referring to FIG. 4, the attaching a conductive layer 2 to a surface of an organic substrate layer 1 includes the following steps.

S1. Attach an adhesive layer 3 to the organic substrate layer 1.

In some embodiments, the attaching an adhesive layer 3 to the organic substrate layer 1 includes: stacking a raw material of an adhesive layer 3 and a raw material of the organic substrate layer 1, and then performing synchronous compounding and stretching to attach the adhesive layer 3 to the organic substrate layer 1. Compared with a method such as dipping, coating, or physical vapor deposition, the method of synchronous compounding and stretching has fewer steps, effectively improving the preparation efficiency and implementing better coverage of the adhesive layer 3. In other embodiments, a method such as dipping, coating, or physical vapor deposition can be used for implementing the attachment of the adhesive layer 3. This is not limited in this application.

Further, the raw material of the adhesive layer 3 includes a prepolymer of a second polymer material. A number-average molecular weight of the prepolymer is 5×10³ to 7×10³. Controlling the number-average molecular weight of the prepolymer to be 5×10³ to 7×10³ allows the prepolymer to have good fluidity, so that the prepolymer can be uniformly applied onto an organic substrate. A melting point of the prepolymer is not higher than 100°C. Controlling the melting point of the prepolymer to be not higher than 100°C allows the prepolymer to be polymerized in a subsequent heating process during preparation, thereby implementing better adhesion performance. The method further includes heating the adhesive layer 3 for curing, so as to implement polymerization of the prepolymer.

S2. Attach the conductive layer 2 to a surface of the adhesive layer 3 away from the organic substrate layer 1.

In some embodiments, the attaching the conductive layer 2 to a surface of the adhesive layer 3 away from the organic substrate layer 1 includes: attaching a metal plate to the surface of the adhesive layer 3 away from the organic substrate layer 1, and then thinning the metal plate to transform the metal plate into a conductive layer 2. The attachment of the metal plate to the adhesive layer 3 is implemented through thermal compounding, thereby preventing damage to the organic substrate layer 1 caused by a method like sputtering. In other embodiments, the attachment of the metal layer can be implemented using a method such as sputtering, vacuum deposition, ion plating, or laser pulse deposition. This is not limited in this application.

Further, a method for the thinning includes chemical corrosion; and a thickness of the metal plate is 5 µm to 20 µm. A thicker metal plate has a higher strength, making it easier to process during preparation. However, considering that the metal plate needs to be thinned eventually, a thinner metal plate allows for a higher efficiency in thinning and reduces waste of metal.

The following describes this application in detail by using examples and comparative examples.

Examples and Comparative examples

A current collector includes:
an organic substrate layer, where a material of the organic substrate layer includes a first polymer material;
adhesive layers, where the adhesive layers are disposed on two surfaces of the organic substrate layer; and
a conductive layer, where the conductive layer is attached to a surface of the adhesive layer away from the organic substrate layer.

Parameter control of the first polymer layers in the examples and comparative examples is shown in the following table.

| | First polymer material | | | | | | |
|---|---|---|---|---|---|---|---|
| | Initial melting temperature (°C) | Melting range (°C) | Phase change latent heat (J/g) | Type | Number-average molecular weight | Crystalline structure | Temperature result of heating test (°C) |
| Example 1 | 160 | 10 | 200 | Polypropylene | 8×10⁴ to 9×10⁴ | Fibrous crystal | 137 |
| Example 2 | 150 | 10 | 200 | Polypropylene | 7×10⁴ to 8×10⁴ | Fibrous crystal | 141 |
| Example 3 | 140 | 10 | 200 | Polypropylene | 6×10⁴ to 7×10⁴ | Fibrous crystal | 143 |
| Example 4 | 130 | 10 | 200 | Polypropylene | 4×10⁴ to 5×10⁵ | Fibrous crystal | 140 |
| Example 5 | 120 | 10 | 200 | Polypropylene | 3×10⁴ to 4×10⁵ | Fibrous crystal | 136 |
| Example 6 | 110 | 10 | 200 | Polypropylene | 2×10⁴ to 3×10⁵ | Fibrous crystal | 136 |
| Example 7 | 140 | 15 | 200 | Polypropylene | 6×10⁴ to 7×10⁴ | Fibrous crystal | 137 |
| Example 8 | 140 | 8 | 200 | Polypropylene | 6×10⁴ to 7×10⁴ | Fibrous crystal | 144 |
| Example 9 | 140 | 6 | 200 | Polypropylene | 6×10⁴ to 7×10⁴ | Fibrous crystal | 144 |
| Example 10 | 140 | 4 | 200 | Polypropylene | 6×10⁴ to 7×10⁴ | Fibrous crystal | 146 |
| Example 11 | 140 | 2 | 200 | Polypropylene | 6×10⁴ to 7×10⁴ | Fibrous crystal | 148 |
| Example 12 | 140 | 10 | 250 | Polypropylene | 6×10⁴ to 7×10⁴ | Fibrous crystal | 145 |
| Example 13 | 140 | 10 | 300 | Polypropylene | 6×10⁴ to 7×10⁴ | Fibrous crystal | 147 |
| Example 14 | 140 | 10 | 350 | Polypropylene | 6×10⁴ to 7×10⁴ | Fibrous crystal | 149 |
| Example 15 | 140 | 10 | 400 | Polypropylene | 6×10⁴ to 7×10⁴ | Fibrous crystal | 151 |
| Example 16 | 140 | 10 | 200 | Polyethylene | 8×10⁴ to 9×10⁴ | Fibrous crystal | 145 |
| Example 17 | 140 | 10 | 200 | Polyurethane | 3×10⁴ to 5×10⁴ | Fibrous crystal | 145 |
| Example 18 | 140 | 10 | 200 | Polyethylene terephthalate | 6×10³ to 8×10³ | Fibrous crystal | 138 |
| Example 19 | 140 | 10 | 200 | Polypropylene | 9×10⁴ to 1×10⁵ | Shish-kebab | 142 |
| Example 20 | 140 | 10 | 200 | Polypropylene | 8×10⁴ to 9×10⁴ | Extended chain lamella | 143 |
| Example 21 | 135 | 15 | 170 | Polypropylene | 6×10⁴ to 7×10⁴ | Extended chain lamella | 140 |
| Example 22 | 150 | 15 | 170 | Polypropylene | 8×10⁴ to 9×10⁴ | Extended chain lamella | 137 |
| Comparative example 1 | 170 | 10 | 200 | Polypropylene | 1×10⁵ to 2×10⁵ | Fibrous crystal | 133 |
| Comparative example 2 | 260 | 15 | 170 | Polyethylene terephthalate | 2×10⁴ to 3×10⁴ | Extended chain lamella | 135 |

The current collectors provided in the examples and comparative examples were assembled into an electrochemical apparatus (cell design: lithium cobaltate/graphite, 4.5 V system, and 5 Ah capacity) as cathodes. The assembly process was as follows.

### Preparation of anode plate:

95wt% negative electrode active material particles graphite, 2wt% conductive agent acetylene black, 2wt% thickener sodium carboxymethyl cellulose, and 1wt% binder styrene butadiene rubber were mixed and added with a proper amount of deionized water, and the resulting mixture was well stirred and mixed to produce a negative electrode active slurry. The negative electrode active slurry was applied onto two surfaces of a 6 µm-thick copper foil, with a coating amount of 0.2 g/1540.25 mm², followed by drying, cold pressing, and cutting to obtain an anode plate.

### Preparation of cathode plate:

96wt% lithium cobaltate, 2wt% superconductive carbon black, and 2wt% binder polyvinylidene fluoride were mixed in a solvent N-methylpyrrolidone, and the resulting mixture was well stirred and mixed to produce a positive electrode active slurry. The positive electrode active slurry was applied onto two surfaces of a 9 µm-thick current collector, with a coating amount of 0.3 g/1540.25 mm², and then dried to obtain a positive electrode active slurry layer. Then cold pressing and cutting were performed to obtain a cathode plate.

### Preparation of electrode assembly:

Separators were made of a PP (polypropylene, polypropylene) material, and a thickness of the separator was 20 µm. The anode plate, the first separator, the cathode plate, and the second separator were stacked and then wound to obtain an electrode assembly.

### Preparation of electrochemical apparatus:

The electrode assembly was placed into a housing, and an electrolyte was injected into the housing, followed by formation to obtain an electrochemical apparatus. The electrolyte contained 2 mol/L lithium hexafluorophosphate as a solute and a solvent of ethylene carbonate and dimethyl carbonate at a volume ratio of 1:1.

Subsequently, a heating test was performed to evaluate thermal safety improvement of a cell. A specific process of the heating test was as follows: After fully charged, the electrochemical apparatus was placed on a hot box test device; a hot box was heated at a speed of 5°C/min; after heated to 140°C, the hot box was maintained at that temperature for 60 min and then cooled; and a temperature of the electrochemical apparatus was measured.

Evaluation results of the thermal safety improvement of the cells are shown in the following table.

| | Temperature result of heating test (°C) |
|---|---|
| Example 1 | 137 |
| Example 2 | 141 |
| Example 3 | 143 |
| Example 4 | 140 |
| Example 5 | 136 |
| Example 6 | 136 |
| Example 7 | 137 |
| Example 8 | 144 |
| Example 9 | 144 |
| Example 10 | 146 |
| Example 11 | 148 |
| Example 12 | 145 |
| Example 13 | 147 |
| Example 14 | 149 |
| Example 15 | 151 |
| Example 16 | 145 |
| Example 17 | 145 |
| Example 18 | 138 |
| Example 19 | 142 |
| Example 20 | 143 |
| Example 21 | 140 |
| Example 22 | 137 |
| Comparative example 1 | 133 |
| Comparative example 2 | 135 |

It can be learned from the above table that the use of the current collector provided in the embodiments of this application allows the electrochemical apparatus to operate under a relatively high temperature. The comparison between the data of Examples 1 to 6 shows that as the initial melting temperature of the first polymer material increases, the temperature result of the heating test shows a trend of increasing first and then decreasing. It can be seen that the initial melting temperature of 110°C to 160°C is a preferable range for the first polymer material, the initial melting temperature of 130°C to 150°C is a more preferable range for the first polymer material, and the temperature results of the heating test are all above 140°C. The comparison between Examples 7 to 11 and Example 3 shows that as the melting range of the first polymer material becomes smaller, the temperature result of the heating test increases gradually. It can be seen that a smaller melting range of the first polymer material is more conducive to the safety performance of the electrochemical apparatus. The comparison between Examples 12 to 15 and Example 3 shows that as the phase change latent heat of the first polymer material increases, the temperature result of the heating test increases gradually. It can be seen that a larger phase change latent heat of the first polymer material is more conducive to the safety performance of the electrochemical apparatus. The comparison between Examples 16 to 18 and Example 3 shows that no matter the first polymer material is polypropylene, polyethylene, or polyurethane, the electrochemical apparatus can achieve good safety performance.

The foregoing descriptions are merely specific embodiments of this application and are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A current collector, wherein the current collector comprises: an organic substrate layer and conductive layers disposed on two surfaces of the organic substrate layer; a material of the organic substrate layer comprises a first polymer material; an initial melting temperature of the first polymer material is not higher than 160°C; and the first polymer material is a phase-change material.

2. The current collector according to claim 1, wherein phase change latent heat of the first polymer material is not less than 200 J/g.

3. The current collector according to claim 2, wherein the first polymer material satisfies at least one of the following conditions:
(a) the initial melting temperature of the first polymer material is 110°C to 160°C; or
(b) a melting range of the first polymer material does not exceed 15°C.

4. The current collector according to claim 3, wherein the first polymer material satisfies at least one of the following conditions:
(c) a crystalline structure of the first polymer material comprises fibrous crystal;
(e) the first polymer material comprises at least one of polypropylene, polyethylene, polystyrene, polyvinyl chloride, polyether, polyester, polyamide, polyurethane, or polysulfide rubber;
(e) a number-average molecular weight of the first polymer material is 10⁴ to 10⁶;
(f) the initial melting temperature of the first polymer material is 130°C to 150°C;
(g) the melting range of the first polymer material does not exceed 10°C; or
(h) the phase change latent heat of the first polymer material is not less than 300 J/g.

5. The current collector according to any one of claims 1 to 4, wherein the current collector further comprises an adhesive layer, and the adhesive layer is disposed between the organic substrate layer and the conductive layer.

6. The current collector according to claim 5, wherein a material of the adhesive layer comprises a second polymer material; and
the second polymer material comprises at least one of polyvinyl alcohol, acrylate adhesive, unsaturated polyester adhesive, EVA hot melt adhesive, or acrylic emulsion adhesive.

7. The current collector according to claim 5, wherein the material of the adhesive layer further comprises a filler, and the filler satisfies at least one of the following conditions:
(i) the filler comprises at least one of boehmite, silicon oxide, carbon powder, or nanofiber; or
(j) the filler comprises a pigment.

8. The current collector according to any one of claims 1 to 4, wherein a thickness of the conductive layer is 0.1 µm to 4 µm.

9. The current collector according to claim 8, wherein the thickness of the conductive layer is 0.5 µm to 3 µm.

10. A preparation method of current collector, wherein the method comprises:
attaching a conductive layer to a surface of an organic substrate layer, wherein a material of the organic substrate layer comprises a first polymer material; an initial melting temperature of the first polymer material is not higher than 160°C; and the first polymer material is a phase-change material.

11. The preparation method of current collector according to claim 10, wherein the attaching a conductive layer to a surface of an organic substrate layer comprises:
attaching an adhesive layer to the organic substrate layer; and
attaching the conductive layer to a surface of the adhesive layer away from the organic substrate layer.

12. The preparation method of current collector according to claim 11, wherein the attaching the conductive layer to a surface of the adhesive layer away from the organic substrate layer comprises:
attaching a metal plate to the surface of the adhesive layer away from the organic substrate layer, and then thinning the metal plate to transform the metal plate into a conductive layer.

13. The preparation method of current collector according to claim 12, wherein a method for the thinning comprises chemical corrosion; and/or
a thickness of the metal plate is 5 µm to 20 µm.

14. The preparation method of current collector according to claim 13, wherein the attaching an adhesive layer to the organic substrate layer comprises:
stacking a raw material of the adhesive layer and a raw material of the organic substrate layer, and then performing synchronous compounding and stretching to attach the adhesive layer to the organic substrate layer.

15. The preparation method of current collector according to claim 14, wherein the raw material of the adhesive layer comprises a prepolymer of a second polymer material, and the prepolymer satisfies at least one of the following conditions:
(k) a number-average molecular weight of the prepolymer is 5×10³ to 7×10³; or
(1) a melting point of the prepolymer is not higher than 100°C.

16. The preparation method of current collector according to claim 15, wherein the method further comprises heating the adhesive layer for curing so as to implement polymerization of the prepolymer.

17. An electrochemical apparatus, wherein the electrochemical apparatus comprises the current collector according to any one of claims 1 to 9.

18. An electronic device, wherein the electronic device comprises the electrochemical apparatus according to claim 17.
